# EUROPÄISCHE PATENTSCHRIFT

(11) **EP 1 238 789 B1**
(45) Veröffentlichungstag und Bekanntmachung des Hinweises auf die Patenterteilung: **28.01.2004**
(21) Anmeldenummer: 02003490.6
(22) Anmeldetag: 15.02.2002
(51) Int. Cl.: B29D 31/00, B29K 9/00, B29K 33/18

(54) **Verfahren zur Herstellung einer Prägewalze aus Silikonkautschuk zum kontinuierlichen Prägen der Oberfläche einer thermoplastischen Folie**
Manufacturing method for a silicon rubber embossing roll for continuously embossing the surface of a thermoplastic sheet
Méthode de fabrication d'une cylindre de grainage en caoutchouc silicone pour l'estampage en continu de la surface d'une feuille thermoplastique

(30) Priorität: 07.03.2001 DE 10110922
(43) Veröffentlichungstag der Anmeldung: 11.09.2002
(73) Patentinhaber: Benecke-Kaliko Aktiengesellschaft, D-30419 Hannover (DE)
(72) Erfinder: Mäker, Michael, 30169 Hannover (DE); Vogt, Günter, 31737 Rinteln (DE); Ohlinger, Rainer, Dr., 30519 Hannover (DE)
(74) Vertreter: Leine, Sigurd, Dipl.-Ing.

(56) Entgegenhaltungen:
- EP-A- 0 712 706
- WO-A-91/01225
- DE-A- 3 405 985
- DE-A- 4 324 970
- GB-A- 1 063 154

## Beschreibung

Die Erfindung betrifft ein Verfahren der im Oberbegriff des Anspruchs 1 genannten Art zur Herstellung einer Prägewalze zum kontinuierlichen Prägen der Oberfläche einer thermoplastischen Folie.

Durch DE 34 05 985 C2 ist ein Verfahren zur Herstellung einer Prägewalze zum kontinuierlichen Prägen der Oberfläche einer thermoplastischen Folie bekannt, bei der die Oberflächenstruktur durch mehrere Abgußvorgänge von einer natürlichen Narbungsvorlage abgeleitet wird. Dieses bekannte Verfahren führt zwar zu dem gewünschten Ergebnis einer Silikonprägewalze mit kontinuierlicher Oberflächenstruktur, jedoch ist ein wesentlicher Nachteil dieses bekannten Verfahrens der große Aufwand für die Durchführung der Zwischenschritte, um die Oberflächenstruktur zu schaffen.

Durch DE 44 41 216 C2 ist ein Verfahren bekannt, bei dem die Prägestruktur in der aus Silikongummi bestehenden Prägeoberfläche einer Prägewalze unmittelbar durch Bearbeitung mittels eines Laserstrahls erzeugt wird, die in an sich bekannter Weise orts- und oberflächenabhängig entsprechend der Oberflächenstruktur einer Mustervorlage bewegt wird. Auch mit diesem bekannten Verfahren wird eine hohe Vorlagentreue, insbesondere auch bei sehr feinen Oberflächenstrukturen erreicht. Ein Vorteil dieser bekannten Lehre besteht darin, daß die Prägeoberfläche der Prägewalze unmittelbar ohne irgendwelche Zwischenschritte erzeugt wird. Das bedeutet eine beträchtliche Zeitersparnis sowie eine Möglichkeit zur Erzeugung einer großen Vielfalt unterschiedlicher Oberflächenstrukturen gegenüber dem zuvor angegebenen bekannten Verfahren. Ein Nachteil besteht darin, daß die Silikongummiwalzen sehr empfindlich und anfällig für Beschädigung sind, so daß nach einer bestimmten Präge- und Betriebsdauer die vorhandene Prägewalze durch eine neue Prägewalze ersetzt werden muß, wozu wiederum die komplizierte Bearbeitung der Prägeoberfläche mittels eines Laserstrahls erforderlich ist.

Durch DE 43 24 970 A1 ist ein Verfahren der im Oberbegriff des Anspruchs 1 genannten Art bekannt, bei dem eine Hilfswalze verwendet wird, in deren glatte Oberfläche die Prägestruktur nicht in Negativform wie bei dem zuvor geschilderten bekannten Verfahren erzeugt wird, sondern in Positivform. Dies ermöglicht es, eine Prägeoberfläche in Silikongummi unmittelbar durch Abguß von der Oberfläche der Hilfswalze zu erzeugen. Auf die Oberfläche der Hilfswalze mit positiver Prägestruktur wird zu diesem Zweck eine gleichmäßig dicke Schicht aus Silikonkautschuk aufgegossen oder aufgestrichen und zu einer Prägetochter vulkanisiert, so daß in dieser eine Prägeoberfläche mit Negativstruktur entsteht. Nach dem Vulkanisieren wird die schlauchförmige Prägetochter umgekrempelt und mit der negativ strukturierten Prägeoberfläche nach außen auf eine Umfangsfläche einer Prägewalze aufgeklebt. Mit dieser Prägewalze kann dann unmittelbar das kontinuierliche Prägen der Oberfläche einer thermoplastischen Oberfläche erfolgen.

Von der positiv strukturierten Oberfläche der Hilfswalze kann durch das einfache Abgußverfahren eine große Zahl von Prägetöchtern erzeugt werden. Da dieser Abgußvorgang einfach ist und wenig Zeit erfordert, ist es nicht unbedingt erforderlich, mehrere Ersatzprägewalzen vorrätig zu halten, vielmehr kann immer im Bedarfsfall schnell eine Prägetochter erzeugt und auf eine Prägewalze aufgeklebt werden.

Eine Schwierigkeit besteht bei diesem bekannten Verfahren darin, dafür zu sorgen, daß sich die aus Silikonkautschuk bestehende Prägetochter nach dem Vulkanisieren von der Oberfläche der Hilfswalze ablösen läßt. Daher ist Silikonkautschuk als Kunststoff im Bereich der Umfangsfläche der Hilfswalze weniger geeignet. Dies auch deshalb, weil angewendete Trennmittel die Feinstruktur der Prägeoberfläche beeinträchtigen können.

Der Erfindung liegt daher die Aufgabe zugrunde, das Verfahren gemäß dem Oberbegriff des Anspruchs 1 so auszugestalten, daß sich die aus Silikonkautschuk bestehende Prägetochter nach dem Vulkanisieren von der Oberfläche der Hilfswalze ablösen läßt.

Die der Erfindung zugrundeliegende Aufgabe wird durch die im Kennzeichen des Anspruchs 1 angegebene Lehre gelöst. Nach dieser Lehre besteht der Werkstoff im Bereich der Umfangsfläche der Hilfswalze aus Nitrylbutadienkautschuk. Bei Verwendung dieses Werkstoffs ist ein leichtes Ablösen des auf die Umfangsfläche der Hilfswalze aufgebrachten und vulkanisierten Silikonkautschuks von der Prägetochter ohne Schwierigkeit möglich.

Das erfindungsgemäße Verfahren ist nicht nur bei einer Prägewalze anwendbar, sondern auch in gleicher Weise bei einem Prägestempel zum diskontinuierlichen Prägen der Oberfläche einer thermoplastischen Folie.

### Beispiel

Auf eine vorzugsweise aus Stahl bestehende Hilfswalze zunächst eine Schicht von Nitrylbutadienkautschuk aufgebracht, deren Umfangsfläche glatt ist. Die Hilfswalze wird gedreht und dabei ein Laserstrahl parallel zur Drehachse der Hilfswalze über deren Umfangsfläche geführt, und zwar so, daß im wesentlichen die gesamte Umfangsfläche überstrichen wird. Während dieser Bewegung des Laserstrahls relativ zu der Oberfläche der Hilfswalze wird die Intensität des Laserstrahls gesteuert, und zwar in Abhängigkeit von einem Steuersignal, das durch die Abtastung der Oberfläche einer Mustervorlage gewonnen wird. Die Abtastung der Oberfläche erfolgt optisch oder mechanisch, und entsprechend dieser Abtastung wird ein elektrisches Signal erzeugt, das unmittelbar zur Steuerung des Lasers verwendet wird. Die Polarität des elektrischen Signals ist dabei so, daß die in der Oberfläche der Hilfswalze erzeugte Prägestruktur ein Positiv der Oberflächenstruktur der gewünschten, zu erzeugenden Oberflächenstruktur ist.

Nachdem die gesamte Oberfläche der Hilfswalze in dieser Weise mit einer positiven Prägestruktur versehen ist, wird auf diese Oberfläche eine gleichmäßig dicke Schicht aus Silikonkautschuk aufgegossen oder aufgestrichen und danach zu einer Prägetochter ausgehärtet bzw. vernetzt. Diese Prägetochter wird anschließend von der Oberfläche der Hilfswalze abgezogen und dabei umgekrempelt und so mit ihrer negativen Prägestruktur nach außen auf die Umfangsfläche einer Prägewalze geklebt, mit der dann unmittelbar das Prägen einer thermoplastischen Kunststoffolie unter Wärme und Druck erfolgen kann.

## Patentansprüche

1. Verfahren zur Herstellung einer Prägewalze mit einer Prägeoberfläche aus Silikonkautschuk zum kontinuierlichen Prägen der Oberfläche einer thermoplastischen Folie, wobei die Prägeoberfläche eine Negativform einer zu prägenden Oberflächenstruktur, insbesondere einer Narbung aufweist,
- wobei zunächst eine Hilfswalze hergestellt wird, die wenigstens im Bereich ihrer Umfangsfläche aus einer Schicht eines Werkstoffs besteht,
- wobei die Umfangsfläche glatt ist,
- wobei ein Laserstrahl auf die Umfangsfläche gerichtet wird,
- wobei dabei der Laserstrahl relativ zu der Umfangsfläche bewegt und in Übereinstimmung mit dem jeweiligen Ort der Oberflächenstruktur einer reellen oder imaginären, als Daten vorliegenden Mustervorlage gesteuert wird, derart, daß die Oberflächenstruktur der Mustervorlage als Positivstruktur in der Umfangsfläche der Hilfswalze erzeugt wird,
- wobei auf die so erzeugte positiv strukturierte Umfangsfläche der Hilfswalze eine gleichmäßig dikke Schicht aus Silikonkautschuk aufgegossen oder aufgestrichen wird, die zu einer Prägetochter vulkanisiert wird, und
- wobei die Prägetochter von der Umfangsfläche der Hilfswalze abgezogen, umgekrempelt und mit der negativ strukturierten Prägeoberfläche nach außen auf eine Umfangsfläche einer Prägewalze aufgeklebt wird,
**dadurch gekennzeichnet, daß** der Werkstoff im Bereich der Umfangsfläche der Hilfswalze Nitrylbutadienkautschuk (NbR) ist.

## Claims

1. A method of manufacturing an embossing roller having an embossing surface made of silicone rubber for continuously embossing the surface of a thermoplastic sheet, where the embossing surface has a negative shape of a to-be-embossed surface structure, in particular of a grain,
- whereby firstly an auxiliary roller is manufactured, which is comprised of a layer of a material at least in the region of its peripheral area,
- whereby the peripheral area is smooth,
- whereby a laser beam is directed at the peripheral area,
- whereby the laser beam moves relative to the peripheral area, and is controlled in accordance with the respective surface structure place of a real or imaginary sample pattern - present as data - such that the sample pattern surface structure is produced as a positive structure in the peripheral area of the auxiliary roller,
- whereby the embossing copy is removed from the peripheral surface of the auxiliary roller, is turned inside out, and with the negative -structured embossing surface on the outside, is glued to a peripheral surface of an embossing roller,
**characterised in that** the material in the region of the peripheral area of the auxiliary roller is nitrylbutadiene rubber (NbR).

## Revendications

1. Procédé de fabrication d'un rouleau graineur avec une surface de matriçage en caoutchouc au silicone, pour le matriçage en continu de la surface d'une feuille thermoplastique, la surface de matriçage présentant une forme négative d'une structure de surface à grainer, en particulier d'un grain,
dans lequel
- est d'abord fabriqué un rouleau auxiliaire, qui est constitué au moins dans la zone de sa surface périphérique d'une couche de matériau ,
- la surface périphérique est lisse,
- un faisceau laser est dirigé sur la surface périphérique,
- le faisceau laser est déplacé alors par rapport à la surface périphérique et est commandé en conformité avec chaque emplacement de la structure de surface d'un modèle de dessin réel ou imaginaire se présentant sous forme de données, de telle sorte que la structure de surface du modèle de dessin est créée sous forme d'une structure positive à la surface périphérique du rouleau auxiliaire,
- grâce à quoi, sur la surface périphérique structurée positivement ainsi créée, du rouleau auxiliaire, est répandue ou enduite une couche d'épaisseur uniforme de caoutchouc au silicone, qui est vulcanisée en un graineur secondaire, et
- le graineur secondaire est retiré de la surface périphérique du rouleau auxiliaire, replié et collé, avec la surface de grainage structurée négativement vers l'extérieur, sur la surface périphérique d'un rouleau graineur,
**caractérisé en ce que** le matériau dans la zone de la surface périphérique du rouleau auxiliaire est du caoutchouc au nitryl-butadiène (NbR).
